# EUROPEAN PATENT SPECIFICATION

(11) **EP 4 566 143 B1**
(45) Date of publication and mention of the grant of the patent: **22.04.2026**
(21) Application number: 23749105.5
(22) Date of filing: 02.08.2023
(51) Int. Cl.: H02J 7/00, H02J 50/12, H02J 50/80

(54) **WIRELESS POWER TRANSFER**
DRAHTLOSE STROMÜBERTRAGUNG
TRANSFERT DE PUISSANCE SANS FIL

(30) Priority: 05.08.2022 EP 22188970
(43) Date of publication of application: 11.06.2025
(73) Proprietor: Koninklijke Philips N.V., 5656 AG Eindhoven (NL)
(72) Inventor: DRAAK, Johannes Wilhelmus, 5656 AG Eindhoven (NL); LEBENS, Pascal Leonard Maria Theodoor, 5656 AG Eindhoven (NL); AGAFONOV, Aleksei, 5656 AG Eindhoven (NL)
(74) Representative: Philips Intellectual Property & Standards
(86) International application number: PCT/EP2023/071463
(87) International publication number: WO 2024/028414

(56) References cited:
- EP-A1- 3 570 410
- EP-A1- 3 661 015
- EP-A1- 3 869 667
- US-A1- 2021 257 864

## Description

### FIELD OF THE INVENTION

The invention relates to a wireless power transfer system and in particular, but not exclusively, to the operation of a power transmitter providing inductive power transfer to high power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.5KW.

EP 3 661 015 A1 discloses an example of a wireless power transfer system including functions for detecting proximal foreign objects.

EP 3 869 667 A1 discloses a wireless power transfer system including functions for detecting proximal foreign objects, which function can be (re)calibrated.

A wide range of power transmitters and power receivers can exist. For example, the coil sizes, induction values and loads vary a lot and therefore the system parameters and power transfer operational parameters may vary substantially with specific devices and mechanical constructions. In addition, placement of the power receiver relative to the power transmitter may change the coupling and thus the power transfer properties.

Furthermore, the power receivers may have several modes in which they operate, for example several loads may be switched on or off. As an example, for a typical Airfryer appliance powered by a wireless power transfer, the heating element can be turned on and off resulting of a a load step between typical values of around 50 to around 1200W. This switching may be repeated during operation in order for the Airfryer to keep the temperature of the heating element substantially constant.

Also, the power transfer may include non-linear loads, for example instead of a resistive component the powered device may include a motor (e.g. a food processor). This typically results in a completely different response of the system and may have a significant impact on the control system design.

A power transfer system will typically use a control loop to ensure that the right operating point is reached. This control loop changes the amount of power that is transmitted to the power receivers. The received power (or voltage or current) can be measured by the power receiver which can be compared to a desired value to generate an error signal. The power receiver can then transmit this error signal to the power control function in the power transmitter which may dynamically adapt the generated power transfer signal in order to seek to reduce the static error to zero.

A critical challenge for wireless power transfer systems is to ensure an efficient and reliable initialization of power transfer operations. For example, reaching the desired operating point by allowing the control loop to adapt the power transfer operation will typically be a slow process that tends to introduce a substantial delay in the power provision. This may for example introduce a noticeable delay before a power device, such as a powered appliance, is able to start up.

Other challenges include that power transfer should be initiated safely and with minimal risk of unacceptable operating conditions occurring. Further, it is desired that power transfer is quickly initiated with as little a delay as possible. Also, low complexity and reduced communication overhead is desired.

Thus, the transition to a power transfer phase is rather difficult and challenging process requiring a number of operations to be performed and certain conditions to be met before the power transfer can start. Current approaches tend to be suboptimal and not provide ideal performance.

Hence, an improved power transfer operation would be advantageous and, in particular, an approach allowing increased flexibility, reduced cost, reduced complexity, improved operation, more accurate power transfer operation, more flexibly power transfer, improved suitability for higher power level transfers, improved and/or facilitated power transfer initialization, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a method of initiating a power transfer in a wireless power transfer system comprising a power transmitter transferring power to a power receiver using a power transfer signal inducing a current in a power receiver coil of the power receiver, the method comprising: the power receiver transmitting a first request to the power transmitter during a non-power transfer phase, the first request being a request to transition from the non-power transfer phase to a power transfer phase; the power receiver operating in a first load state following the transmission of the first request, a load of the power receiver being decoupled from the power receiver coil when the power receiver is operating in the first load state; the power transmitter receiving the first request; the power transmitter performing a first measurement of a first power transfer parameter in response to receiving the first request; the power transmitter transmitting a first acknowledgement to the power receiver following the first measurement; the power receiver receiving the first acknowledgement; the power receiver switching to a second load state in response to receiving the first acknowledgement, the load of the power receiver being coupled to the power receiver coil when the power receiver is operating in the second load state; the power receiver transmitting a second request to the power transmitter in connection with entering the second load state, the second request being a request for power; the power transmitter receiving the second request; the power transmitter performing a second measurement of a second system parameter in response to receiving the second request; the power transmitter entering a power transfer phase generating a power transfer signal in dependence on the first measurement and on the second measurement.

The invention may provide improved and/or facilitated performance and/or operation and/or implementation of a wireless power transfer operation and system. The approach may provide improved transition to and initialization of a power transfer. In many scenarios it may ensure a safer and/or more reliable initialization and startup of power transfer.

A non-power transfer phase may be a phase not being a power transfer phase. The power of the power transfer signal may be limited to a lover value in the non-power transfer phase than in the power transfer phase, and typically the maximum power level during the non-power transfer phase may be no more than 1%, 5%, 10%, or 25% of the maximum power level during the power transfer phase in many embodiments.

The power transmitter may enter the power transfer phase generating a power transfer signal in dependence on the first measurement and on the second measurement in that it enters the power transfer phase generating the power transfer signal in dependence on a measured value of the first power transfer parameter and on a measured value of the second power transfer parameter.

The first load state may also be referred to as a load decoupled state or an unloaded state. The first measurement may also be referred to as a load decoupled measurement. The second load state may also be referred to as a load coupled state or a loaded state. The second measurement may also be referred to as a load coupled measurement.

The power receiver may be arranged to operate in a second/loaded state in which the load is connected to the power path of the input resonance circuit and in a first/ unloaded state in which the load is disconnected from the power path of the input resonance circuit.

The second request being a request for power in that it may be a request for the power transfer phase to begin.

In accordance with an optional feature of the invention, the power receiver is arranged to include at least one requested power transfer parameter in the second request; and the power transmitter is arranged to set at least one parameter of the power transfer signal in dependence on the requested power transfer parameter.

This may provide improved performance in many embodiments and scenarios. It may allow an improved initialization of the power transfer phase with an initial operating point that may be closer to the desired/ optimal operating point.

The property may specifically be an initial property of the power transfer phase when entering the power transfer phase.

In accordance with an optional feature of the invention, the power transmitter is arranged to generate the power transfer signal to have a property dependent on at least one of the first measurement and the second measurement.

This may provide improved performance in many embodiments and scenarios. It may allow an improved initialization of the power transfer phase with an initial operating point that may be closer to the desired/ optimal operating point.

The property may specifically be an initial property of the power transfer phase when entering the power transfer phase.

In accordance with an optional feature of the invention, the power transmitter performs a foreign object detection based on the first measurement and terminates initiating the power transfer if the foreign object detection indicates a presence of a foreign object.

The approach may provide a more reliable and improved initialization of a power transfer phase. It may provide an improved mitigation and/or risk reduction for the presence of foreign objects.

In accordance with an optional feature of the invention, the power transmitter performs a foreign object detection based on the second measurement and terminates initiating the power transfer if the foreign object detection indicates a presence of a foreign object.

The approach may provide a more reliable and improved initialization of a power transfer phase. It may provide an improved mitigation and/or risk reduction for the presence of foreign objects.

In accordance with an optional feature of the invention, the power transmitter is arranged to transmit a second acknowledgement to the power receiver following the second measurement and prior to entering the power transfer phase.

This may provide improved performance in many embodiments and scenarios.

In accordance with an optional feature of the invention, the power transmitter is arranged to generate the power transfer signal during the power transfer phase with a maximum delay of 20 msec of transmitting the second acknowledgement.

This may provide improved performance in many embodiments and scenarios.

In accordance with an optional feature of the invention, the power transmitter is arranged to synchronize a start of the power transfer phase to a timing of a cycle of a power supply signal for the power transmitter.

This may provide improved performance in many embodiments and scenarios.

In some embodiments, the power transmitter may be arranged to synchronize a start of the power transfer phase to a timing of a cycle of a mains power supply to the power transmitter.

In some embodiments, the power transmitter is arranged to align a start of the power transfer phase with a timing of a cycle of a power supply signal for the power transmitter.

In some embodiments, the power transmitter may be arranged to align a start of the power transfer phase with a timing of a cycle of a mains power supply to the power transmitter.

In accordance with an optional feature of the invention, the power transmitter is arranged to terminate initiating the power transfer if no second request is received before expiry of a predetermined time interval.

This may provide improved performance in many embodiments and scenarios.

In accordance with an optional feature of the invention, the power transmitter is arranged to transmit a non-acknowledge message to the power receiver in response to a termination of the initiation of the power transfer.

This may provide improved performance in many embodiments and scenarios.

According to an aspect of the invention, the load is a load of at least 10, 20, 50, 100, 500, or 1000 Watts. This may provide improved performance in many embodiments and scenarios.

According to an aspect of the invention there is provided a method of a power receiver initiating a power transfer in a wireless power transfer system comprising a power transmitter transferring power to the power receiver using an inductive power transfer signal inducing a current in a power receiver coil of the power receiver, the method comprising: transmitting a first request to the power transmitter during a non-power transfer phase, the first request being a request to transition from the non-power transfer phase to a power transfer phase; operating in a first load state following the transmission of the first request, a load of the power receiver being decoupled from the power receiver coil when the power receiver is operating in the first load state; receiving a first acknowledgement from the power transmitter; switching to a second load state in response to receiving the first acknowledgement, the load of the power receiver being coupled to the power receiver coil when the power receiver is operating in the second load state; transmitting a second request to the power transmitter in connection with entering the second load state, the second request being a request for power; entering a power transfer phase wherein power is extracted by the power receiver from the power transfer signal.

According to an aspect of the invention, method of a power transmitter initiating a power transfer in a wireless power transfer system comprising the power transmitter transferring power to a power receiver using an inductive power transfer signal, the method comprising: receiving a first request being a request to transition from a non-power transfer phase to a power transfer phase; performing a first measurement of a first power transfer parameter in response to receiving the first request; sending a first acknowledgement to the power receiver following the first measurement; receiving a second request being a request for power and indicating that the power receiver has switched from a first load state to a second load state, a load being decoupled from a power receiver coil of the power receiver when in the first load state and coupled to the power receiver coil when in the second load state; performing a second measurement of a second system parameter in response to receiving the second request; and entering a power transfer phase generating a power transfer signal in dependence on the first measurement and on the second measurement.

According to an aspect of the invention there is provided a power receiver for a wireless power transfer system comprising a power transmitter transferring power to the power receiver using an inductive power transfer signal, the power receiver comprising: a power receiver coil arranged to extract power from the power transfer signal by induction; a first transmitter arranged to transmit a first request to the power transmitter during a non-power transfer phase, the first request being a request to transition from the non-power transfer phase to a power transfer phase; a mode processor arranged to control the power receiver to operate in a first load state following the transmission of the first request, a load of the power receiver being decoupled from the power receiver coil when the power receiver is operating in the first load state; a receiver arranged to receive a first acknowledgement from the power transmitter; wherein the mode processor is further arranged to control the power receiver to switch to a second load state in response to receiving the first acknowledgement, the load of the power receiver being coupled to the power receiver coil when the power receiver is operating in the second load state; the transmitter is arranged to transmit a second request to the power transmitter in connection with entering the second load state, the second request being a request for power; and the power receiver further comprises: a controller arranged to enter a power transfer phase wherein power is extracted by the power receiver from the power transfer signal.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of an equivalence circuit for the power transfer system of FIG. 1;
FIG. 3 illustrates an example of elements of a power transmitter in accordance with some embodiments of the invention;
FIG. 4 illustrates an example of a half bridge inverter for a power transmitter;
FIG. 5 illustrates an example of a full bridge inverter for a power transmitter;
FIG. 6 illustrates an example of elements of a power receiver in accordance with some embodiments of the invention;
FIG. 7 illustrates an example of a method of operation and specifically initialization of a power transfer phase in accordance with some embodiments of the invention;
FIG. 8 illustrates an example of a power transfer signal during power transfer phase initialization in accordance with some embodiments of the invention.

### DETAILED DESCRIPTION OF THE EMBODIMENTS

The following description focuses on embodiments of the invention applicable to a wireless power transfer system utilizing a power transfer approach such as known from the Qi Specification or the Ki Specification. However, it will be appreciated that the invention is not limited to this application but may be applied to many other wireless power transfer systems.

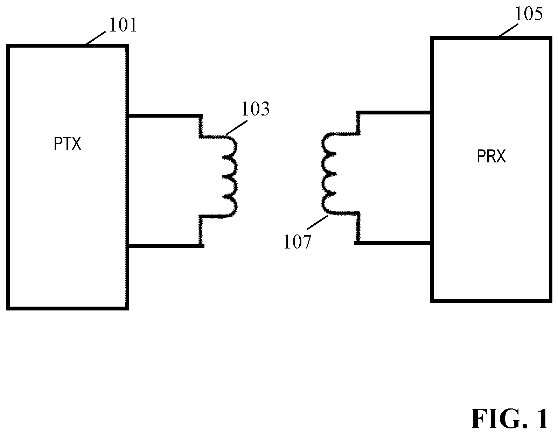

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic signal which may inductively transfer power from the power transmitter 101 to the power receiver 105. Specifically, the power transmitter 101 generates an electromagnetic signal, which is propagated as a magnetic flux by the transmitter coil or inductor 103. The electromagnetic signal is a signal generated by the transmitter coil 103 in response to a drive signal being provided to the transmitter coil 103. During power transfer the electromagnetic signal transfers power to the power receiver 105 (and specifically to the receiver coil 107) and it will in the following be referred to as the power transfer signal. More generally, the term power transfer signal may refer to any electromagnetic signal/ field generated by the transmitter coil 103 (including both in a power transfer phase and outside of the power transfer phase, such as in a standby/off/ connected phase, and including a signal/field generated not for the specific purpose of powering the power receiver load but e.g. to perform measurements, communicate, or provide standby power).

The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500 mW, 1W, 5W, 50W, 100W or 500W in many embodiments. For example, for Qi corresponding applications, the power transfers may typically be in the 1-5W power range for low power applications (the basic power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Qi or Ki Specifications (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

For many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

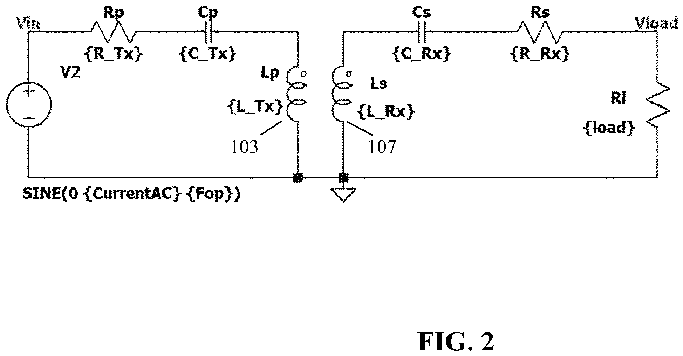

An example of an electrical equivalence diagram for the power transfer function of the power transmitter 101 and the power receiver 105 is illustrated in FIG. 2. A wide range of power transmitters and power receivers may exist in a given system and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

Furthermore, the power receiving devices may have several different modes in which they operate, such as for example with different Voltage levels (5V, 12V, 20V) to power the load.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The appliance sends this error signal to the power control function in the power transmitter to reduce the static error, ideally to zero.

However, since the system performance and operation vary greatly depending on the existing power transmitter and power receiver combination and placements, the appropriate operating point also varies greatly. This includes the conditions at start-up/ initialization of a power transfer.

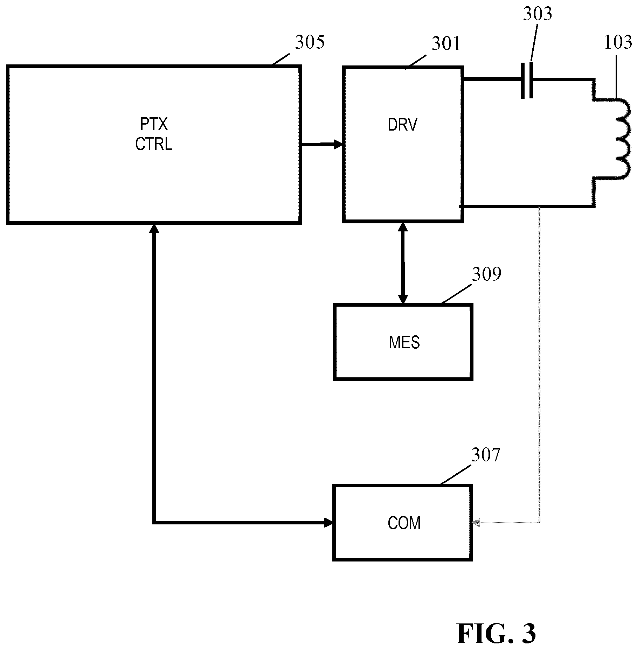

FIG. 3 illustrates elements of the power transmitter 101 of FIG. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one including multiple inductors and/or capacitors.

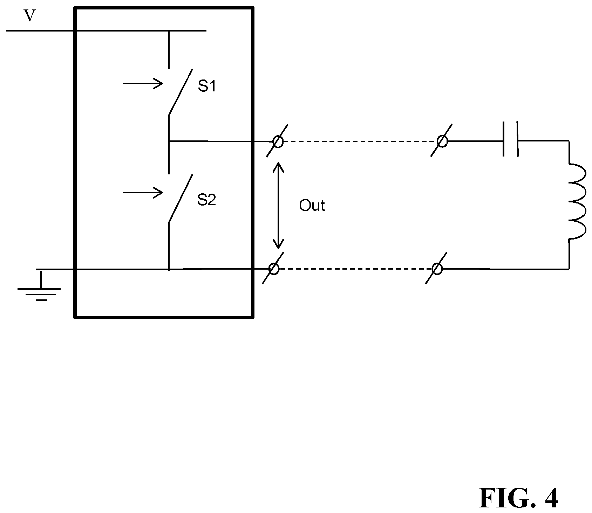

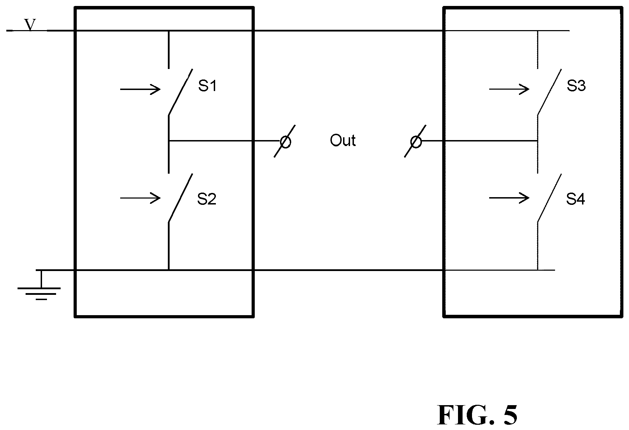

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi Specification or the Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

The power transmitter controller 305 may further comprise a communicator 307 for communicating with the power receiver 105. For example, the communicator 307 may control the driver 301/ power transmitter controller 305 to transmit data to the power receiver 105 by modulating the power transfer signal and it may receive data from the power receiver 105 by detecting load modulation of the power transfer signal. It will be appreciated that in other embodiments, other means of communication may be used such as e.g. a separate communication functionality such as NFC communication may be implemented.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

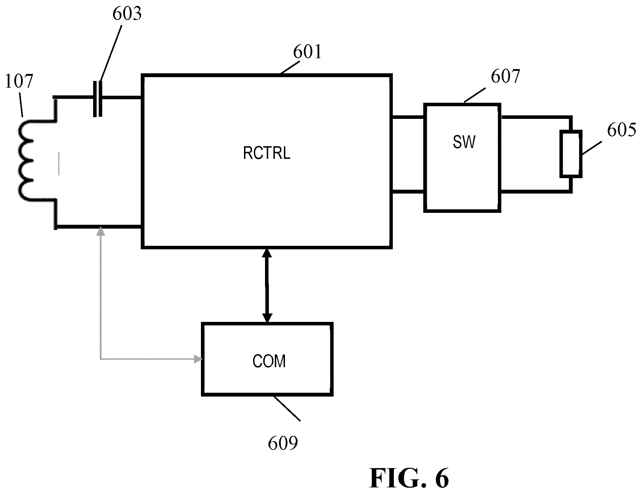

FIG. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits.

The power receiver controller 601 couples the receiver coil 107 to a load 605 via a switch 607 which specifically may be capable of connecting, disconnecting (or even shorting) the load 605. The power receiver controller 601 includes a power control path which converts the power extracted by the receiver coil 107 into a suitable supply for the load 605. In some embodiments, the power receiver controller 601 may provide a direct power path which simply connects/ couples the input resonance circuit to the switch 607 or load 605, i.e. the power path of the power receiver controller 601 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi or Ki Specifications.

The power receiver controller 601 may further comprise a communicator 609 for communicating with the power transmitter 101. For example, it may be arranged to decode and demodulate data modulated onto the power transfer signal and it may be arranged to transmit data to the power transmitter 101 by load modulating the power transfer signal. In some embodiments, a separate communication function, such as an NFC communication function may be employed.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

At regular, and typically frequent, intervals, the power receiver transmits a power control error message to the power transmitter. The power receiver 105 comprises functionality for supporting such a power control loop, e.g. the power receiver controller 601 may continuously monitor the power or voltage of a load signal provided to the load and detect whether this is above or below a desired value. It may at regular intervals generate a power control error message which requests that the power level of the power transfer signal is increased or decreased, and it may transmit this power control error message to the power transmitter.

When receiving a power control error message from the power receiver, the transmit controller 305 may determine how the drive signal parameter should be modified to increase or decrease the power level of the power transfer signal as requested. It may then control and adapt the drive signal parameter accordingly.

A power control loop is accordingly employed which controls a power property of the power transfer signal to result in the desired operating point at the power receiver. The operation of the power transfer is thus controlled by a power control loop and the effective operation of this is critical to the performance of the system. Initializing or adapting the power control loop to the operation conditions is thus critical for optimum performance.

In many wireless power transfer systems, the setting up of a new power transfer setup includes different phases. In many cases, the detection of a presence of a power receiver by the power transmitter may result in the setting entering a state/ phase in which the power transmitter and power receiver are each aware of the presence of a complementary device and a with typically a (possibly dormant) communication link being established between them. However, in this phase/ mode, the system may possibly be a standby state where no power is transferred and which does not automatically proceed to a power transfer phase. Such a phase may be referred to as a connected phase and may be a static phase in which the system remains until a specific event or action occurs. For example, when a kitchen appliance, say a blender, is positioned in location for wireless power transfer, this may be detected by the power transmitter and a connected phase may be entered. It may then remain in that phase e.g. until a user switches the device (e.g. blender) to an on position in response to which the system may proceed to an active power transfer phase.

The transition to an active power transfer phase from a passive connected phase or from a state where no power transmitter and power receiver proximity exist (e.g. without an intervening connected phase) is a critical process with a number of steps and processes that may be performed in order to ensure a safe, reliable, efficient, high performance initialization of a power transfer phase.

In the following, a particular advantageous approach that may typically achieve one or more of these preferences will be described with reference to the power transfer system of FIGs. 1-6.

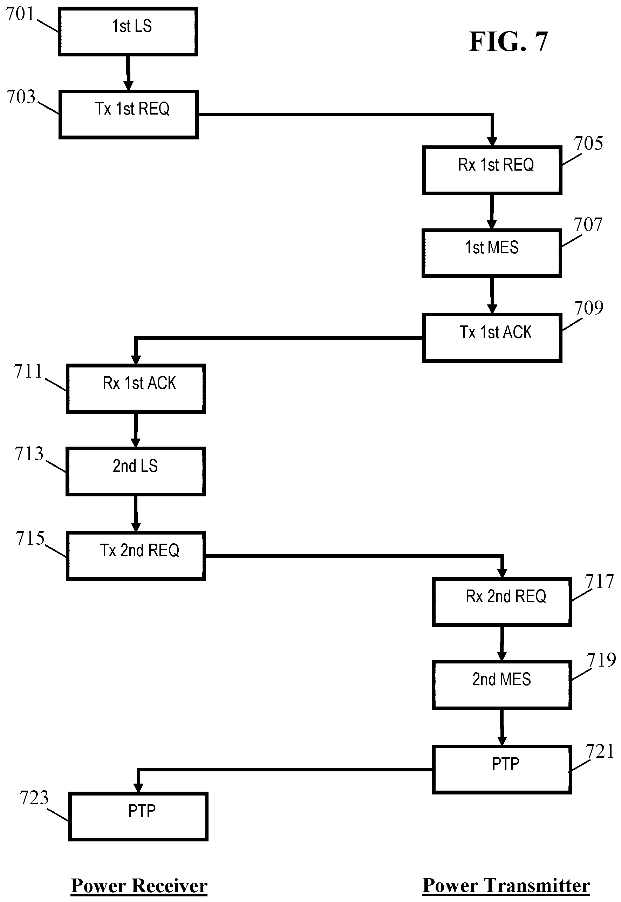

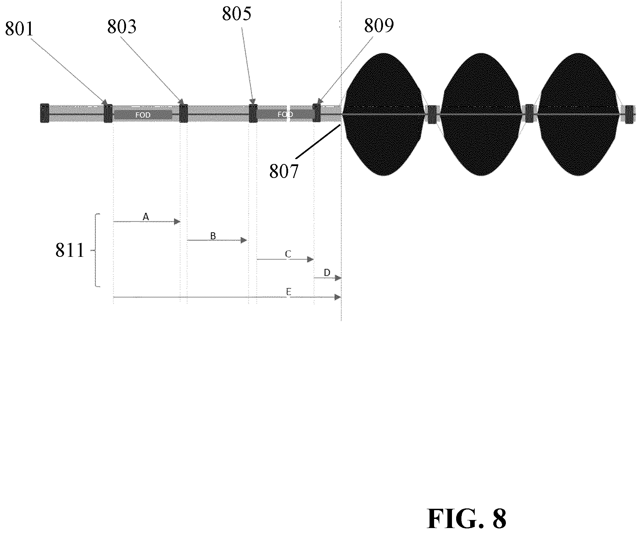

FIG. 7 illustrates a flowchart of elements/ steps of a method of operation for the power transfer system. In particular, FIG. 7 may illustrate a method of initializing a power transfer phase from e.g. a connected or other non-power phase. The figure illustrates steps performed by the system, and in particular performed by both the power transmitter and the power receiver. FIG. 8 illustrates a power transfer signal generated by the transmitter coil 103 during the initialization process and during initial parts of the power transfer phase.

In the example, the wireless power transfer system is initially in non-power transfer phase which may for example be a standby or a connected phase where no power transfer is occurring. However, in, for example, a connected phase, the power transmitter and the power receiver may be aware of each other and have established a bilateral communication link allowing them to exchange data massages.

In the example, the method starts in step 701 where the power receiver is arranged to operate in a first load state that may also be referred to as a low power load state, an unloaded state, or a load decoupled state. In this first load state, the power receiver may specifically decouple the load 605 from the input resonance circuit. The power transfer signal/ electromagnetic field generated by the transmitter coil 103 may thus typically be very low (or even zero) as indicated in FIG. 8.

The power receiver may also be operable to switch to a second load state, which may also be referred to as a low power load state, a loaded state, or a load decoupled state. In this second load state, the power receiver may couple the load 605 from the input resonance circuit.

The power receiver may be arranged to operate in at least two different load states that have different power loadings of the power transfer signal and drive signal of the power transmitter. The two load states differ by at least one load (component) being coupled to the input resonance circuit (and loading the power transfer signal/ the drive signal/ the electromagnetic field generated by the power transmitter/ power transmitter coil) in one load state (the second load state) but being decoupled from the input resonance circuit (and not loading the power transfer signal/ the drive signal/ the electromagnetic field generated by the power transmitter/ power transmitter coil) in the other load state. The loading of an electromagnetic field generated by the power transmitter (and thus the drive signal) by the power receiver is accordingly different for the first load state and for the second load state.

Typically, the difference in the loading between the first and second load states may be significant. In many embodiments, the (power) loading in the first load state is no more than 25%, 10%, 5%, or even 2% of the loading in the second load state.

The power receiver may exhibit a substantially different load of the power transmitter in the two load states. In particular, the first load state may substantially correspond to a situation where no power is provided to the end load of the power receiver whereas the second load state may substantially correspond to a situation where the end load is fully powered by the power transmitter and power receiver. In the specific example, the first load state is one in which the switch 607 disconnects the load 605 from the power path and the second load state is one in which the switch 607 connects the load 605 to the power path. In the first load state power is not fed to the load 605 whereas in the second load state power is fed to the load 605.

It will be appreciated that in some embodiments, some power may still be extracted from the electromagnetic field/ the power transmitter when the power receiver is in the first load state (such as e.g. some standby power may be extracted and provided to power various control functions of a power receiver device). However, the amount of power extracted in the first and second load state will tend to be very substantially different.

Step 701 in which the power receiver is entered into the first load state (or maintained in this state) is followed by step 703 in which the power receiver transmits a request (message) to the power transmitter with the request being a request to the power transmitter to initiate a transition from the non-power transfer phase (the connected phase) to a power transfer phase. Thus, as illustrated in FIG. 8, at some time instant 801, the power receiver proceeds to transmit a request for the power transmitter to initiate a new power transfer operation.

The power receiver may for example (e.g. either as part of step 701 or 703) continuously monitor for an event that indicates that power transfer is required. For example, it may remain in the connected phase while continuously monitoring for a user input that indicates a desire to initiate a power transfer. For example, for a kitchen appliance, it may be detected that an on button is pressed by a user resulting in the initiation of the power transfer commencing. In other embodiments, other approaches may be used such as e.g. an automatic detection of a change in the coupling factor between the power receiver and power transmitter (e.g. a move of the power receiving appliance may result in a power transfer initiation) or an automatic detection of a change in the environment (e.g. using motion detection).

When the power receiver decides that a power transfer operation should be initiated it transmits the first request message to the power transmitter. In step 705 the power transmitter receives the first request message. It will be appreciated that many different approaches for transmitting a message/ data from a power transmitter to a power receiver are known and that any suitable approach may be used without detracting from described approaches and principles.

In response to receiving the first request message, the power transmitter initiates a process of initialization of a power transfer operation. In the described approach, the power transmitter proceeds to step 707 in response to the receipt of the first request message. In step 707, a measurement circuit/ processor 309 of the power transmitter performs a first measurement of a first power transfer parameter. The power transfer parameter may specifically be a parameter which is dependent on/ reflects a loading by the power receiver of the power transfer signal/ electromagnetic field generated by the transmitter coil. Such operating parameters may include a determination of a level of load, a coupling factor, a size of the loading, etc.

The first measurement is thus a measurement of a power transfer parameter when the power receiver is in the first decoupled load state, i.e. when the loading is reduced in comparison to the second (coupled/ connected) load state. The first measurement may in the following also be referred to as a decoupled load measurement and the measured power transfer parameter may be referred to as a decoupled power transfer parameter.

The power transmitter may subsequently proceed to step 709 in which the power transmitter transmits a first acknowledgement to the power receiver. This first acknowledgement may be a message that indicates to the power receiver that indeed the first measurement has (successfully) been performed. Thus, as illustrated in FIG. 8, at some time instant 803, the power transmitter proceeds to transmit an acknowledge (message) to the power receiver indicating that the first decoupled measurement has been performed.

In step 711, the power receiver receives the first acknowledgement and in response it proceeds to step 713 where it switches from the first to the second load state. Thus, in the specific example, the power receiver is arranged to switch from the load decoupled load state to the load coupled load state in response to the power receiver receiving the first acknowledgement from the power receiver. Thus, the power transmitter performs a switch from operating in a mode where the loading of the power transmitter/ power transfer signal is very low to one where it is high, and specifically it may switch from an off or standby loading to a full power phase loading of the input resonance circuit/ power transfer signal/ electromagnetic field.

Following the switch to the second load state, the power receiver proceeds to step 715 in which it transmits a second request (message). This second request may be a request for the power transmitter to start generating a power transfer signal for powering the power receiver. It may be a request for the power transfer phase to begin. The second request further confirms to the power transmitter that the power receiver has switched to the second (load coupled) load state in which the load is coupled to the input resonance circuit. Thus, as illustrated in FIG. 8, at some time instant 805 the power receiver proceeds to transmit a request for the power transmitter to start the power transfer phase.

The power transmitter proceeds to receive the second request in step 717 and in response it proceeds to step 719 in which the measurement circuit/ processor 309 performs a second measurement of a power transfer parameter. The power transfer parameter may specifically be a parameter which is dependent on/ reflects a loading by the power receiver of the power transfer signal/ electromagnetic field generated by the transmitter coil. Such operating parameters may include a determination of a level of load, a coupling factor, a size of the loading, etc. In many embodiments, the power transfer parameter measured in the first measurement will be the same as the power transfer parameter measured in the second measurement, but in other embodiments the two measurements may measure different power transfer parameters. Thus, in step 707 a first measurement may be performed of a first power transfer parameter using a first measurement approach (technique/ algorithm). In the step 719, a second measurement may be performed of a second power transfer parameter using a second measurement approach (technique/ algorithm). The first measurement, power transfer parameter, and/or measurement approach (technique/ algorithm) may be the same as the second measurement, power transfer parameter, and/or measurement approach (technique/ algorithm); or may be different.

The second measurement is thus a measurement of a power transfer parameter when the power receiver is in the second coupled load state, i.e. when the loading is increased in comparison to the first (decoupled) load state, typically substantially. The second measurement may in the following also be referred to as a coupled load measurement and the measured power transfer parameter may be referred to as a coupled power transfer parameter.

The power transmitter then proceeds to step 721 in which it proceeds to enter a power transfer phase in which the power transmitter generates the power transfer signal in order to transfer power to the power receiver. As illustrated in FIG. 8, at some time instant 807, the power transmitter may proceed to enter the power transfer phase and generate a power transfer signal of a significant level in order to transfer power to the power receiver. The power receiver further proceeds to remain in or enter the power transfer phase 723.

In some embodiments, the generated power transfer signal may be at a semi- constant level (e.g. only changing based on the power control loop). However, in other embodiments, as in the example of FIG. 8, the power transfer signal may be generated to follow the amplitude of a time varying supply signal to the driver. For example, the supply voltage to the output circuit of the driver may be a signal derived directly from the mains as an AC or rectified but not smoothed DC signal. In such a case, the power transfer signal amplitude will be time varying in line with the varying supply signal. Further, in some embodiments, the power transfer phase may include alternating time intervals for power transfer and for other functions such as foreign object detection and/or communication. Thus, power transfer time intervals may be separated by typically short time intervals in which no power transfer signal is generated. Such intervals may typically be located at minimums of the amplitude of the power transfer signal/ the supply voltage. FIG. 8 illustrates an example of such operation during the power transfer phase.

The power transmitter is in the approach arranged to enter the power transfer phase in response to the two measurements, i.e. in dependence on both coupled and decoupled measurements, and specifically in many embodiments dependent on the values of the measured power transfer parameters. In some embodiments, the entering of the power transfer phase may be conditional on the measurements, e.g. the power transfer phase may only be entered if the measured coupled and/or decoupled parameter values meet a suitable criterion. In some embodiments, a parameter, property, or characteristic of the power transfer operation during the power transfer phase, such as an initial parameter value, may be dependent on the measurements, e.g. an initial value of a parameter of the drive signal/ power transfer signal may be dependent on a measured coupled and/or decoupled power transfer parameter value.

The approach may provide a particularly advantageous initialization of a power transfer operation and a power transfer phase in many scenarios and embodiments. The approach provides an efficient and reliable approach with reduced risk of errors and undesired situations occurring. The approach provides for a reliable interaction and synchronization between the power transmitter and power receiver when initializing power transfer. Further, the approach includes power transmitter side measurements of power transfer parameters for substantially different loads and operating points being performed prior to entering the power transfer phase, and the power transfer phase may be entered in dependence on the measurements. This may typically provide a more reliable and improved initialization of the power transfer phase, and may e.g. ensure that power transfer is only started if it is safe to do so and/or may be started with initial properties that are closer to a desired operating point.

The measurements may in many embodiments be performed with a substantial difference in the loading of the drive signal/ power transmitter/ electromagnetic field/ power transfer signal. In many embodiments, the power difference in the loading between the first and second load states, and thus between the first and second measurements, is no less than 5,10, 15, 20, 50, 100, 500 or even 1000 Watts. Accordingly, information relating to very different operating points may be generated during the initialization and thus may result in an improved adaptation of the operation and the power transfer.

In some embodiments, the first and/or second measurement may be used to perform foreign object detection tests. If any of these foreign object detection tests lead to a determination that a foreign object may potentially be present, the power transmitter may proceed to terminate the initialization of the power transfer phase. The approach may allow accurate foreign object detection for different operating points and may provide for improved safety and a more reliable power transfer phase initialization. In particular, the foreign object detection being performed at different operating points may provide a more accurate foreign object detection.

Indeed, advantageously, foreign object detection may first be performed for the decoupled load state. This test may be performed with a low level power transfer signal which may result in a less accurate test. However, larger objects that extract a significant amount of power can still be detected and thus the system will only proceed to the second foreign object detection test which is performed when in the coupled load state if any foreign object is sufficiently benign to not be e.g. unsafe at the higher power level of the second measurement. However, the second measurement/ coupled foreign object detection test may be substantially more accurate due to potentially a higher power transfer signal level and thus even relatively small foreign objects may be detected. The combination of the two foreign object detection tests in respectively a coupled and uncoupled load state may thus provide improved performance.

It will be appreciated that different approaches for foreign object detection in wireless power transfer systems are known and that any suitable approach or algorithm may be used. The approaches and algorithms may be the same for first and second detections or may indeed be different.

One possible approach is based on determining unknown power losses. In this approach, the power transmitter may measure the generated power level and may compare this to an expected power loss for the power receiver. In low complexity embodiment, the power loss caused by the power receiver in the decoupled load state may simply be considered to be substantially zero. In other embodiments, a nominal power loss (e.g. caused by friendly metal of the power receiver and/or a loading by standby circuitry) may be expected and compared to the measured power transmitter power loss. Thus, the first measurement may be a measurement of a power level of the drive signal and thus power level may be compared to an expected value for the power receiver when in the decoupled load state. If the measured power exceeds the expected value by more than a margin/ threshold a foreign object may be considered to be detected.

The power transmitter may estimate its transmitted power, e.g. by measuring the DC input voltage and current of the inverter, multiplying them and correcting the result by subtracting an estimation of the internal power losses in the transmitter, such as e.g. the estimated power loss in the inverter, the primary coil, and metal parts that are part of the power transmitter etc.

The power transmitter can estimate the resulting power loss by subtracting the expected extracted power from the transmitted power. If the difference exceeds a threshold, the transmitter will assume that too much power is dissipated in a foreign object, and it can then proceed to terminate the initialization of the power transfer.

The same approach may be used for the coupled foreign object detection with the addition that the expected power receiver power loss is modified to include the expected power being provided to the load.

Thus, in such embodiments, the first and/or second measurements may be a measurement of a power level for the drive signal/ power transfer signal of the power transmitter and a foreign object detection may be performed by comparing this measurement to an expected value.

Another option is to measure the quality or Q-factor of the resonant circuit formed by the transmitter coil 103 and the receiver coil 107 together with the corresponding capacitances and resistances. A reduction in the measured Q-factor (compared to an expected value) may be indicative of a foreign object being present. Thus, in such embodiments, the first and/or second measurements may be a measurement of a Q factor for the power transmitter and power receiver arrangement and a foreign object detection may be performed by comparing this measurement to an expected value.

In some embodiments, the power transmitter may be arranged to generate the power transfer signal during the power transfer phase in dependence on the first and/or the second measurement.

For example, the initial signal level for the power transfer phase when the power transfer phase starts may be set dependent on a measured power level during the second measurement. Thus, the coupled measurement may include measuring the power level of the drive signal when the power receiver is in the coupled load state. When the power transfer phase is initiated, the power transmitter may for example set the power level (e.g. by controlling the voltage and/or current amplitude of the drive signal) to the same value, or possibly to another value determined as a fixed function thereof.

In some embodiments, the second request from the power receiver may include an indication of a requested power transfer parameter, such as specifically a requested power level for the power transfer phase. The power transmitter may be arranged to set a parameter of the drive signal/ power transfer signal dependent on this request.

For example, the power receiver may request that a power level, say, twice that of the load during the second measurement is provided for the power transfer phase. The power transmitter may determine a suitable amplitude of the drive signal (e.g. current or voltage) based on this request and e.g. a value (e.g. current or voltage) measured during the second measurement. For example, the amplitude measured during the second measurement may be scaled by a given scale factor reflecting the increased power level.

In some embodiments, the first and/or second measurements may be a resonance frequency measurement. For example, a frequency sweep may be performed that allows resonance frequencies for the power transfer to be determined by detecting peaks in e.g. a current or power of the drive signal. The performance at the different loads may be used to provide information of resonance frequencies at different loads. Such information may for example be used to determine a suitable operating frequency when starting the power transfer phase. For example, it may be arranged to adapt or select a suitable operating range for a power control loop that adapts the transferred power level by varying the drive/ operating frequency. For example, the operating range may be set to be, say, between 60% to 80% of the measured resonance frequency (or e.g. of an average frequency of the different measured resonance frequencies) with the initial operating frequency when starting the power transfer phase being set to the middle of the operating range (e.g. at 70% of the measured resonance frequency. As another example, resonance frequencies at different loads may be used to determine a coupling factor between the transmitter coil and the receiver coil and the initial e.g. power level when entering the power transfer phase may be set to reflect the determined coupling factor.

In some embodiments, the power transmitter may in response to the second request begin the power transfer by generating a drive signal and power transfer signal with suitable parameters, such as frequency, current, voltage, and/or power, to provide an appropriate wireless power transfer. In many embodiments, the power receiver may simply when transmitting the second request enter a mode suitable for the power transfer phase. For example, it may connect (or maintain the connection of) the load to the power path and the input resonance circuit such that when a suitable power transfer signal is generated by the power transmitter entering the power transfer phase, suitable power is transferred to the load. For example, for a blender, the load may be a motor which automatically starts when the power transmitter generates a suitable power transfer signal.

In some embodiments, the power receiver may operate in a standby mode until it is detected that the power transmitter has entered the power transfer phase. For example, the switch 607 may disconnect the load 605 until a power transfer signal/ generated electromagnetic filed strength/ induced voltage above a threshold is detected at which time it may switch to connect the load 605. This may for example ensure that the load (which for example may include delicate electronic circuits) is not powered until full power can be provided.

In some embodiments, the power transmitter may be arranged to transmit a second acknowledgement to the power receiver following the second measurement and in connection with entering the power transfer phase, and e.g. prior to or upon entering the power transfer phase. For example, as illustrated in FIG. 8, a second acknowledgement may be transmitted by the power transmitter to the power receiver at a given time instant 809 which may typically be e.g. shortly prior to the start of the power transfer phase.

The second acknowledgement may indicate to the power receiver that the second measurement (and indeed all other operations) have been successfully performed and that the power transfer phase is starting or has started. The power receiver may in response to receiving the second acknowledgement proceed to enter the power receiver into a suitable power transfer phase mode, such as for example by switching the switch 607 to connect the load 605 to the input resonance circuit/ power path.

In some embodiments, the power transmitter may be arranged to transmit a non-acknowledge to the power receiver in response to a termination of the initiation of the power transfer. This may allow the power receiver to terminate the power transfer phase operation. For example, it may switch to a minimal load and/or may generate and present a user indication (e.g. using a provided low level/ stand by power transfer signal or a built in battery).

For example, if the first or second measurement results in unsatisfactory values of the measured parameter, it may be decided that the power transfer phase should not proceed, and that the initiation of the power transfer phase should be terminated (e.g. if a foreign object is detected in either the coupled or decoupled load states, the initialization of the power transfer is terminated and a non-acknowledgement message is transmitted to the power receiver).

As another example, if a time out occurs, e.g. due to an expected response or message not being received in time, the power transmitter may proceed to terminate the initialization of the power transfer phase and transmit a non-acknowledgement to the power receiver.

In some embodiments, the power transmitter may be arranged to synchronize the start of the power transfer phase to a timing of a cycle of a mains power supply to the power transmitter. This may be particularly advantageous in approaches where power transfer signal amplitude is time varying due to variations in a supply voltage to the driver generated from a mains supply.

For example, in many scenarios where the amplitude of the power transfer signal varies, e.g. due to a supply voltage variation, the start of the power transfer phase may be synchronized to start at a minimum amplitude for the power transfer signal. For example, if the power transfer signal amplitude is directly dependent on the supply voltage, the start of the power transfer phase may be synchronized to start at a time instant for which the supply voltage is minimum. In many embodiments, the start of the power transfer phase may be synchronized to occur at time instants of a zero crossing of an AC signal from which the driver 301 is supplied (in some cases a delay may be included). Such an approach may be suitable for a scenario where the AC supply is directly feeding the output of the inverter, or when this is done by a supply signal after rectification. Indeed, even if a smoothing capacitor is provided, the resulting supply voltage will still tend to have ripple that is synchronized with the AC signal, and thus a minimum amplitude of the drive signal may still be synchronized to the AC signal (e.g. with a load dependent delay). Thus, in many embodiments, the start of the power transfer phase is synchronized to an AC signal (e.g. a mains power signal) from which the voltage supply for the output circuit of the driver 301 is derived. FIG. 8 illustrates an example where the start 807 of the power transfer phase is synchronized with a minimum/ zero crossing of the supply and drive signal amplitude.

Such approaches may in many cases provide a more gradual start of the power transfer phase which may e.g. reduce power transients at the load when starting power transfer.

In many embodiments, the process may include various time outs for different operations and steps in the initialization process. This may allow a reliable process that includes built in provisions for terminating the process if something goes wrong. FIG. 8 illustrates some examples of time outs 811 that may be built into the system:
- Timeout A:
   - The time between the power receiver transmitting the first request to move to the power transfer mode and the power transmitter transmitting the first acknowledgement should in many embodiments not exceed 50, 100 or 200 ms.
   - In this time the power transmitter can do a foreign object detection, impedance check, or other system measurement on the unloaded system.
- Timeout B:
   - The time between the power transmitter acknowledge messages and the power receiver switching to the coupled load state and transmitting the second request should in many embodiments not exceed 20, 40, or 60 ms.
- Timeout C:
   - The time between the second request and the power transmitter transmitting the second acknowledgement should in many embodiments not exceed 10, 20, or 30 ms.
   - This is preferably as short as possible since substantial power may be transferred in this situation.
   - In this time the power transmitter may perform a foreign object detection, impedance check, or other system measurement on the loaded system (the secondary side switch is closed, so the load is attached)
- Timeout D:
   - Time between the power transmitter transmitting the second acknowledge and the start of the power transfer phase should in many embodiments not exceed 10, 20, or 30 ms.
- Timeout E:
   - The duration of the entire initialization process time from the first request to the start of the power transfer phase should in many embodiments not exceed 100, 150, 180, 200, 250, or 500 ms.

The power transmitter and power receiver may thus be arranged to perform the operations sufficiently fast for the above timings to be met thereby allowing improved performance.

In many embodiments, the power transmitter and power receiver may also be arranged to perform a time out detection. For example, if one of the above timings is not met with a margin of e.g. 0, 10, 20, 30, 50, 100 msec (different margins may be used for different time outs), the power transmitter and/or power receiver may consider that a time out/ error has occurred and terminate the initialization of the power transfer. This may for example include transmitting a power transfer termination message to the complementary device.

It will be appreciated that the above description for clarity has described embodiments of the invention with reference to different functional circuits, units and processors. However, it will be apparent that any suitable distribution of functionality between different functional circuits, units or processors may be used without detracting from the invention as long as these belong to the scope of appended claims, For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A method of initiating a power transfer in a wireless power transfer system comprising a power transmitter (101) transferring power to a power receiver (105) using a power transfer signal inducing a current in a power receiver coil (107) of the power receiver (105), the method comprising:
the power receiver (105) transmitting (703) a first request to the power transmitter (101) during a non-power transfer phase, the first request being a request to transition from the non-power transfer phase to a power transfer phase;
the power receiver (105) operating (701) in a first load state following the transmission of the first request, a load (605) of the power receiver being decoupled from the power receiver coil when the power receiver (105) is operating in the first load state;
the power transmitter (101) receiving (705) the first request;
the power transmitter (101) performing (707) a first measurement of a first power transfer parameter in response to receiving the first request;
the power transmitter (101) transmitting (709) a first acknowledgement to the power receiver (105) following the first measurement;
the power receiver (105) receiving (711) the first acknowledgement;
the power receiver (105) switching (713) to a second load state in response to receiving the first acknowledgement, the load (605) of the power receiver (105) being coupled to the power receiver coil (107) when the power receiver (105) is operating in the second load state;
the power receiver (105) transmitting (715) a second request to the power transmitter in connection with entering the second load state, the second request being a request for power;
the power transmitter (101) receiving (717) the second request;
the power transmitter (101) performing (719) a second measurement of a second system parameter in response to receiving the second request;
the power transmitter (101) entering (721) a power transfer phase generating a power transfer signal in dependence on the first measurement and on the second measurement.

2. The method of claim 1 wherein the power receiver (105) is arranged to include at least one requested power transfer parameter in the second request; and the power transmitter (101) is arranged to set at least one parameter of the power transfer signal in dependence on the requested power transfer parameter.

3. The method of any previous claim wherein the power transmitter (101) is arranged to generate the power transfer signal to have a property dependent on at least one of the first measurement and the second measurement.

4. The method of any previous claim wherein the power transmitter (101) performs a foreign object detection based on the first measurement and terminates initiating the power transfer if the foreign object detection indicates a presence of a foreign object.

5. The method of any previous claim wherein the power transmitter (101) performs a foreign object detection based on the second measurement and terminates initiating the power transfer if the foreign object detection indicates a presence of a foreign object.

6. The method of any previous claim wherein the power transmitter (101) is arranged to transmit a second acknowledgement to the power receiver (105) following the second measurement and prior to entering the power transfer phase.

7. The method of claim 6 wherein the power transmitter (101) is arranged to generate the power transfer signal during the power transfer phase with a maximum delay of 20 msec of transmitting the second acknowledgement.

8. The method of any previous claim wherein the power transmitter (101) is arranged to synchronize a start of the power transfer phase to a timing of a cycle of a power supply signal for the power transmitter (101).

9. The method of any previous claim wherein the power transmitter (101) is arranged to terminate initiating the power transfer if no second request is received before expiry of a predetermined time interval.

10. The method of any previous claim wherein the power transmitter (101) is arranged to transmit a non-acknowledge message to the power receiver (105) in response to a termination of the initiation of the power transfer.

11. The method of any previous claim wherein the load is a load of at least 10 Watts.

12. A method of a power receiver (105) initiating a power transfer in a wireless power transfer system comprising a power transmitter (101) transferring power to the power receiver (105) using an inductive power transfer signal inducing a current in a power receiver coil (107) of the power receiver, the method comprising:
transmitting a first request to the power transmitter (101) during a non-power transfer phase, the first request being a request to transition from the non-power transfer phase to a power transfer phase;
operating in a first load state following the transmission of the first request, a load of the power receiver (105) being decoupled from the power receiver coil when the power receiver (105) is operating in the first load state;
receiving a first acknowledgement from the power transmitter (101);
switching to a second load state in response to receiving the first acknowledgement, the load of the power receiver (105) being coupled to the power receiver coil when the power receiver (105) is operating in the second load state;
transmitting a second request to the power transmitter (101) in connection with entering the second load state, the second request being a request for power;
entering a power transfer phase wherein power is extracted by the power receiver (105) from the power transfer signal.

13. A method of a power transmitter (101) initiating a power transfer in a wireless power transfer system comprising the power transmitter (101) transferring power to a power receiver (105) using an inductive power transfer signal, the method comprising:
receiving a first request being a request to transition from a non-power transfer phase to a power transfer phase;
performing a first measurement of a first power transfer parameter in response to receiving the first request;
sending a first acknowledgement to the power receiver (105) following the first measurement;
receiving a second request being a request for power and indicating that the power receiver (105) has switched from a first load state to a second load state, a load being decoupled from a power receiver coil (107) of the power receiver (105) when in the first load state and coupled to the power receiver coil when in the second load state;
performing a second measurement of a second system parameter in response to receiving the second request; and
entering a power transfer phase generating a power transfer signal in dependence on the first measurement and on the second measurement.

14. A power receiver (105) for a wireless power transfer system comprising a power transmitter (101) transferring power to the power receiver (105) using an inductive power transfer signal, the power receiver (105) comprising:
a power receiver coil (107) arranged to extract power from the power transfer signal by induction;
a first transmitter (609) arranged to transmit a first request to the power transmitter (101) during a non-power transfer phase, the first request being a request to transition from the non-power transfer phase to a power transfer phase;
a mode processor (601, 607) arranged to control the power receiver to operate in a first load state following the transmission of the first request, a load of the power receiver (105) being decoupled from the power receiver coil (107) when the power receiver (105) is operating in the first load state;
a receiver (609) arranged to receive a first acknowledgement from the power transmitter (101);
wherein
the mode processor (601, 607) is further arranged to control the power receiver (105) to switch to a second load state in response to receiving the first acknowledgement, the load of the power receiver (105) being coupled to the power receiver coil when the power receiver (105) is operating in the second load state;
the transmitter (609) is arranged to transmit a second request to the power transmitter (101) in connection with entering the second load state, the second request being a request for power;
and the power receiver (105) further comprises:
a controller (601) arranged to enter a power transfer phase wherein power is extracted by the power receiver (105) from the power transfer signal.

15. A power transmitter (101) for a wireless power transfer system comprising a power receiver (105) arranged to receive power from the power transmitter (101) using an inductive power transfer signal, the method comprising:
a receiver (307) arranged to receive a first request being a request to transition from a non-power transfer phase to a power transfer phase:
a measure circuit (309) arranged to perform a first measurement of a first power transfer parameter in response to receiving the first request;
a transmitter (307) arranged to transmit a first acknowledgement to the power receiver (105) following the first measurement;
wherein
the receiver (307) is arranged to receive a second request being a request for power and indicating that the power receiver (105) has switched from a first load state to a second load state, a load being decoupled from a power receiver coil (107) of the power receiver (105) when in the first load state and coupled to the power receiver coil when in the second load state;
the measure circuit (309) is arranged to perform a second measurement of a second system parameter in response to receiving the second request;
and the power transmitter (101) further comprises:
a controller (305) arranged to enter a power transfer phase generating a power transfer signal in dependence on the first measurement and on the second measurement.

16. A wireless power transfer system comprising power transmitter (101) in accordance with claim 15 and a power receiver (105) in accordance with claim 14.

## Patentansprüche

1. Verfahren zum Initiieren einer Leistungsübertragung in einem drahtloses Leistungsübertragungssystem, umfassend einen Leistungssender (101), der Leistung an einen Leistungsempfänger (105) unter Verwendung eines Leistungsübertragungssignals, das in einer Leistungsempfängerspule (107) des Leistungsempfängers (105) einen Strom induziert, überträgt, wobei das Verfahren Folgendes umfasst:
den Leistungsempfänger (105), der während einer Phase ohne Leistungsübertragung eine erste Anforderung an den Leistungssender (101) überträgt (703), wobei die erste Anforderung eine Aufforderung zum Übergang von der Phase ohne Leistungsübertragung in eine Phase mit Leistungsübertragung ist;
den Leistungsempfänger (105), der nach der Übertragung der ersten Anforderung in einem ersten Lastzustand arbeitet (701), wobei eine Last (605) des Leistungsempfängers von der Leistungsempfängerspule entkoppelt ist, wenn der Leistungsempfänger (105) im ersten Lastzustand arbeitet;
den Leistungssender (101), der die erste Anforderung empfängt (705);
den Leistungssender (101), der eine erste Messung eines ersten Leistungsübertragungsparameters als Reaktion auf Empfangen der ersten Anforderung durchführt (707);
den Leistungssender (101), der nach der ersten Messung eine erste Bestätigung an den Leistungsempfänger (105) sendet (709);
den Leistungsempfänger (105), der die erste Bestätigung empfängt (711);
den Leistungsempfänger (105), der als Reaktion auf Empfangen der ersten Bestätigung in einen zweiten Lastzustand umschaltet (713), wobei die Last (605) des Leistungsempfängers (105) mit der Leistungsempfängerspule (107) gekoppelt ist, wenn der Leistungsempfänger (105) im zweiten Lastzustand arbeitet;
den Leistungsempfänger (105), der eine zweite Anforderung an den Leistungssender in der Verbindung mit Eintreten in den zweiten Lastzustand sendet (715), wobei die zweite Anforderung eine Leistungsanforderung ist;
den Leistungssender (101), der die zweite Anforderung empfängt (717);
den Leistungssender (101), der eine zweite Messung eines zweiten Systemparameters als Reaktion auf Empfangen der zweiten Anforderung durchführt (719);
den Leistungssender (101), der in eine Leistungsübertragungsphase eintritt (721) und ein Leistungsübertragungssignal in Abhängigkeit von der ersten Messung und von der zweiten Messung erzeugt.

2. Verfahren nach Anspruch 1, wobei der Leistungsempfänger (105) so angeordnet ist, dass er mindestens einen angeforderten Leistungsübertragungsparameter in die zweite Anforderung aufnimmt; und der Leistungssender (101) so angeordnet ist, dass er mindestens einen Parameter des Leistungsübertragungssignals in Abhängigkeit von dem angeforderten Leistungsübertragungsparameter einstellt.

3. Verfahren nach einem vorstehenden Anspruch, wobei der Leistungssender (101) so angeordnet ist, dass er das Leistungsübertragungssignal so erzeugt, dass es eine Eigenschaft aufweist, das von mindestens einer der ersten Messungen und der zweiten Messung abhängig ist.

4. Verfahren nach einem vorstehenden Anspruch, wobei der Leistungssender (101) basierend auf der ersten Messung eine Fremdkörpererkennung durchführt und die Initiierung der Leistungsübertragung beendet, wenn die Fremdkörpererkennung die Anwesenheit eines Fremdkörpers anzeigt.

5. Verfahren nach einem vorstehenden Anspruch, wobei der Leistungssender (101) basierend auf der zweiten Messung eine Fremdkörpererkennung durchführt und die Initiierung der Leistungsübertragung beendet, wenn die Fremdkörpererkennung die Anwesenheit eines Fremdkörpers anzeigt.

6. Verfahren nach einem vorstehenden Anspruch, wobei der Leistungssender (101) so angeordnet ist, dass er nach der zweiten Messung und vor Eintreten in die Leistungsübertragungsphase eine zweite Bestätigung an den Leistungsempfänger (105) überträgt.

7. Verfahren nach Anspruch 6, wobei der Leistungssender (101) so angeordnet ist, dass er das Leistungsübertragungssignal während der Leistungsübertragungsphase mit einer maximalen Verzögerung von 20 ms bei der Übertragung der zweiten Bestätigung erzeugt.

8. Verfahren nach einem vorstehenden Anspruch, wobei der Leistungssender (101) so angeordnet ist, dass er einen Beginn der Leistungsübertragungsphase mit einem Timing eines Zyklus eines Stromversorgungssignals für den Leistungssender (101) synchronisiert.

9. Verfahren nach einem vorstehenden Anspruch, wobei der Leistungssender (101) so angeordnet ist, dass er Initiieren der Leistungsübertragung beendet, wenn vor Ablauf eines vorbestimmten Zeitintervalls keine zweite Anforderung empfangen wird.

10. Verfahren nach einem vorstehenden Anspruch, wobei der Leistungssender (101) so angeordnet ist, dass er als Reaktion auf eine Beendigung der Initiierung der Leistungsübertragung eine Nicht-Bestätigungsnachricht an den Leistungsempfänger (105) überträgt.

11. Verfahren nach einem vorstehenden Anspruch, wobei die Last eine Last von mindestens 10 Watt ist.

12. Verfahren, damit ein Leistungsempfänger (105) eine Leistungsübertragung in einem drahtlosen Leistungsübertragungssystem initiiert, umfassend einen Leistungssender (101), der Leistung an den Leistungsempfänger (105) unter Verwendung eines induktiven Leistungsübertragungssignals, das einen Strom in einer Leistungsempfängerspule (107) induziert, überträgt, wobei das Verfahren Folgendes umfasst:
Übertragen einer ersten Anforderung an den Leistungssender (101) während einer Phase ohne Leistungsübertragung, wobei die erste Anforderung eine Anforderung zum Übergang von der Phase ohne Leistungsübertragung in eine Phase mit Leistungsübertragung ist;
Arbeiten im einem ersten Lastzustand nach der Übertragung der ersten Anforderung, wobei eine Last des Leistungsempfängers (105) von der Leistungsempfängerspule entkoppelt ist, wenn der Leistungsempfänger (105) im ersten Lastzustand arbeitet;
Empfangen einer ersten Bestätigung vom Leistungssender (101);
Umschalten in einen zweiten Lastzustand als Reaktion auf Empfangen der ersten Bestätigung, wobei die Last des Leistungsempfängers (105) mit der Leistungsempfängerspule gekoppelt ist, wenn der Leistungsempfänger (105) im zweiten Lastzustand arbeitet;
Übertragen einer zweiten Anforderung an den Leistungssender (101) in Verbindung mit Eintreten in den zweiten Lastzustand, wobei die zweite Anforderung eine Leistungsanforderung ist;
Eintreten in eine Leistungsübertragungsphase, in der die Leistung durch den Leistungsempfänger (105) aus dem Leistungsübertragungssignal extrahiert wird.

13. Verfahren, damit ein Leistungssender (101) eine Leistungsübertragung in einem drahtlosen Leistungsübertragungssystem initiiert, umfassend den Leistungssender (101), der Leistung an einen Leistungsempfänger (105) unter Verwendung eines induktiven Leistungsübertragungssignals überträgt, wobei das Verfahren Folgendes umfasst:
Empfangen einer ersten Anforderung, die eine Anforderung zum Übergang von einer Phase ohne Stromübertragung zu einer Phase mit Stromübertragung ist;
Durchführen einer ersten Messung eines ersten Leistungsübertragungsparameters als Reaktion auf Empfangen der ersten Anforderung;
Senden einer ersten Bestätigung an den Leistungsempfänger (105) nach der ersten Messung;
Empfangen einer zweiten Anforderung, die eine Leistungsanforderung ist und anzeigt, dass der Leistungsempfänger (105) von einem ersten Lastzustand in einen zweiten Lastzustand umgeschaltet hat, wobei eine Last von einer Leistungsempfängerspule (107) des Leistungsempfängers (105) entkoppelt ist, wenn er sich im ersten Lastzustand befindet, und mit der Leistungsempfängerspule gekoppelt ist, wenn er sich im zweiten Lastzustand befindet;
Durchführen einer zweiten Messung eines zweiten Systemparameters als Reaktion auf Empfangen der zweiten Anforderung; und
Eintreten in eine Leistungsübertragungsphase, die ein Leistungsübertragungssignal in Abhängigkeit von der ersten Messung und der zweiten Messung erzeugt.

14. Leistungsempfänger (105) für ein drahtloses Leistungsübertragungssystem, umfassend einen Leistungssender (101), der Leistung an den Leistungsempfänger (105) unter Verwendung eines induktiven Leistungsübertragungssignals überträgt, wobei der Leistungsempfänger (105) Folgendes umfasst:
eine Spule (107), die so angeordnet ist, dass sie Leistung aus dem Leistungsübertragungssignal extrahiert;
einen ersten Sender (609), der so angeordnet ist, dass er während einer Phase ohne Leistungsübertragung eine erste Anforderung an den Leistungssender (101) überträgt, wobei die erste Anforderung eine Anforderung zum Übergang von der Phase ohne Leistungsübertragung in eine Phase mit Leistungsübertragung ist;
einen Modus-Prozessor (601, 607), der so angeordnet ist, dass er den Leistungsempfänger nach der Übertragung der ersten Anforderung in einem ersten Lastzustand steuert, wobei eine Last des Leistungsempfängers (105) von der Leistungsempfängerspule (107) entkoppelt ist, wenn der Leistungsempfänger (105) im ersten Lastzustand arbeitet;
einen Empfänger (609), der so angeordnet ist, dass er eine erste Bestätigung vom Leistungssender (101) empfängt;
wobei
der Modus-Prozessor (601, 607) weiter so angeordnet ist, dass er den Leistungsempfänger (105) steuert, um als Reaktion auf Empfangen der ersten Bestätigung in einen zweiten Lastzustand umschaltet, wobei die Last des Leistungsempfängers (105) mit der Leistungsempfängerspule gekoppelt ist, wenn der Leistungsempfänger (105) im zweiten Lastzustand arbeitet;
der Sender (609) so angeordnet ist, dass er eine zweite Anforderung an den Leistungssender (101) in Verbindung mit Eintreten in den zweiten Lastzustand sendet, wobei die zweite Anforderung eine Leistungsanforderung ist; und der Leistungsempfänger (105) weiter Folgendes umfasst:
eine Steuereinheit (601), die so angeordnet ist, dass sie in eine Leistungsübertragungsphase eintritt, in der Leistung durch den Leistungsempfänger (105) aus dem Leistungsübertragungssignal extrahiert wird.

15. Leistungssender (101) für ein drahtloses Leistungsübertragungssystem, umfassend einen Leistungssender (101), der so angeordnet ist, dass er Leistung von dem Leistungsempfänger (105) unter Verwendung eines induktiven Leistungsübertragungssignals empfängt, wobei das Verfahren Folgendes umfasst:
einen Empfänger (307), der so angeordnet ist, dass er eine erste Anforderung empfängt, die eine Anforderung zum Übergang von einer Phase ohne Stromübertragung zu einer Phase mit Stromübertragung ist;
eine Messschaltung (309), die so angeordnet ist, dass sie als Reaktion auf Empfangen der ersten Anforderung eine erste Messung eines ersten Leistungsübertragungsparameters durchführt;
einen Sender (307), der so angeordnet ist, dass er nach der ersten Messung eine erste Bestätigung an den Leistungsempfänger (105) überträgt;
wobei
der Empfänger (307) so angeordnet ist, dass er eine zweite Anforderung empfängt, die eine Leistungsanforderung ist und anzeigt, dass der Leistungsempfänger (105) von einem ersten Lastzustand in einen zweiten Lastzustand umgeschaltet hat, wobei eine Last von einer Leistungsempfängerspule (107) des Leistungsempfängers (105) entkoppelt ist, wenn er sich im ersten Lastzustand befindet, und mit der Leistungsempfängerspule gekoppelt ist, wenn er sich im zweiten Lastzustand befindet;
die Messschaltung (309) so angeordnet ist, dass sie als Reaktion auf Empfangen der zweiten Anforderung eine zweite Messung eines zweiten Systemparameters durchführt;
und wobei der Leistungssender (101) weiter Folgendes umfasst:
eine Steuereinheit (305), die so angeordnet ist, dass er in eine Leistungsübertragungsphase eintritt und in Abhängigkeit von der ersten Messung und der zweiten Messung ein Leistungsübertragungssignal erzeugt.

16. Drahtloses Leistungsübertragungssystem, umfassend einen Leistungssender (101) nach Anspruch 15 und einen Leistungsempfänger (105) nach Anspruch 14.

## Revendications

1. Procédé d'initiation d'un transfert de puissance dans un système de transfert de puissance sans fil comprenant un émetteur de puissance (101) transférant de la puissance à un récepteur de puissance (105) en utilisant un signal de transfert de puissance induisant un courant dans une bobine de réception de puissance (107) du récepteur de puissance (105), le procédé comprenant :
le récepteur de puissance (105) transmettant (703) une première requête à l'émetteur de puissance (101) pendant une phase sans transfert de puissance, la première requête étant une requête de transition de la phase sans transfert de puissance à une phase de transfert de puissance ;
le récepteur de puissance (105) fonctionnant (701) dans un premier état de charge à la suite de la transmission de la première requête, une charge (605) du récepteur de puissance étant découplée de la bobine de réception de puissance lorsque le récepteur de puissance (105) fonctionne dans le premier état de charge ;
l'émetteur de puissance (101) recevant (705) la première requête ;
l'émetteur de puissance (101) effectuant (707) une première mesure d'un premier paramètre de transfert de puissance en réponse à la réception de la première requête ;
l'émetteur de puissance (101) transmettant (709) un premier accusé de réception au récepteur de puissance (105) à la suite de la première mesure ;
le récepteur de puissance (105) recevant (711) le premier accusé de réception ;
le récepteur de puissance (105) passant (713) à un second état de charge en réponse à la réception du premier accusé de réception, la charge (605) du récepteur de puissance (105) étant couplée à la bobine de réception de puissance (107) lorsque le récepteur de puissance (105) fonctionne dans le second état de charge ;
le récepteur de puissance (105) transmettant (715) une seconde requête à l'émetteur de puissance en lien avec l'entrée dans le second état de charge, la seconde requête étant une requête de puissance ;
l'émetteur de puissance (101) recevant (717) la seconde requête ;
l'émetteur de puissance (101) effectuant (719) une seconde mesure d'un second paramètre de système en réponse à la réception de la seconde requête ;
l'émetteur de puissance (101) entrant (721) dans une phase de transfert de puissance générant un signal de transfert de puissance en fonction de la première mesure et de la seconde mesure.

2. Procédé selon la revendication 1, dans lequel le récepteur de puissance (105) est agencé pour inclure au moins un paramètre de transfert de puissance demandé dans la seconde requête ; et l'émetteur de puissance (101) est agencé pour définir au moins un paramètre du signal de transfert de puissance en fonction du paramètre de transfert de puissance demandé.

3. Procédé selon une quelconque revendication précédente, dans lequel l'émetteur de puissance (101) est agencé pour générer le signal de transfert de puissance afin de présenter une propriété dépendant d'au moins une de la première mesure et de la seconde mesure.

4. Procédé selon une quelconque revendication précédente, dans lequel l'émetteur de puissance (101) effectue une détection d'objet étranger sur la base de la première mesure et cesse d'initier le transfert de puissance si la détection d'objet étranger indique la présence d'un objet étranger.

5. Procédé selon une quelconque revendication précédente, dans lequel l'émetteur de puissance (101) effectue une détection d'objet étranger sur la base de la seconde mesure et cesse d'initier le transfert de puissance si la détection d'objet étranger indique la présence d'un objet étranger.

6. Procédé selon une quelconque revendication précédente, dans lequel l'émetteur de puissance (101) est agencé pour transmettre un second accusé de réception au récepteur de puissance (105) après la seconde mesure et avant d'entrer dans la phase de transfert de puissance.

7. Procédé selon la revendication 6, dans lequel l'émetteur de puissance (101) est agencé pour générer le signal de transfert de puissance pendant la phase de transfert de puissance avec un délai maximal de 20 ms de transmission du second accusé de réception.

8. Procédé selon une quelconque revendication précédente, dans lequel l'émetteur de puissance (101) est agencé pour synchroniser le début de la phase de transfert de puissance avec la synchronisation d'un cycle d'un signal d'alimentation pour l'émetteur de puissance (101).

9. Procédé selon une quelconque revendication précédente, dans lequel l'émetteur de puissance (101) est agencé pour cesser d'initier le transfert de puissance si aucune seconde requête n'est reçue avant l'expiration d'un intervalle de temps prédéterminé.

10. Procédé selon une quelconque revendication précédente, dans lequel l'émetteur de puissance (101) est agencé pour transmettre un message de non-accusé de réception au récepteur de puissance (105) en réponse à la fin de l'initiation du transfert de puissance.

11. Procédé selon une quelconque revendication précédente, dans lequel la charge est une charge d'au moins 10 watts.

12. Procédé d'un récepteur de puissance (105) initiant un transfert de puissance dans un système de transfert de puissance sans fil comprenant un émetteur de puissance (101) transférant de la puissance au récepteur de puissance (105) en utilisant un signal de transfert de puissance inductive induisant un courant dans une bobine de réception de puissance (107) du récepteur de puissance, le procédé comprenant :
la transmission d'une première requête à l'émetteur de puissance (101) pendant une phase sans transfert de puissance, la première requête étant une requête de transition de la phase sans transfert de puissance à une phase de transfert de puissance ;
le fonctionnement dans un premier état de charge à la suite de la transmission de la première requête, une charge du récepteur de puissance (105) étant découplée de la bobine de réception de puissance lorsque le récepteur de puissance (105) fonctionne dans le premier état de charge ;
la réception d'un premier accusé de réception de l'émetteur de puissance (101) ;
le passage à un second état de charge en réponse à la réception du premier accusé de réception, la charge du récepteur de puissance (105) étant couplée à la bobine de réception de puissance lorsque le récepteur de puissance (105) fonctionne dans le second état de charge ;
la transmission d'une seconde requête à l'émetteur de puissance (101) en lien avec l'entrée dans le second état de charge, la seconde requête étant une requête de puissance ;
l'entrée dans une phase de transfert de puissance, dans lequel la puissance est extraite par le récepteur de puissance (105) du signal de transfert de puissance.

13. Procédé d'un émetteur de puissance (101) initiant un transfert de puissance dans un système de transfert de puissance sans fil comprenant l'émetteur de puissance (101) transférant de la puissance à un récepteur de puissance (105) en utilisant un signal de transfert de puissance inductive, le procédé comprenant :
la réception d'une première requête étant une requête de transition d'une phase sans transfert de puissance à une phase de transfert de puissance ;
l'exécution d'une première mesure d'un premier paramètre de transfert de puissance en réponse à la réception de la première requête ;
l'envoi d'un premier accusé de réception au récepteur de puissance (105) à la suite de la première mesure ;
la réception d'une seconde requête étant une requête de puissance et indiquant que le récepteur de puissance (105) est passé d'un premier état de charge à un second état de charge, une charge étant découplée d'une bobine de réception de puissance (107) du récepteur de puissance (105) lorsqu'elle est dans le premier état de charge et couplée à la bobine de réception de puissance lorsqu'elle est dans le second état de charge ;
l'exécution d'une seconde mesure d'un second paramètre de système en réponse à la réception de la seconde requête ; et
l'entrée dans une phase de transfert de puissance générant un signal de transfert de puissance en fonction de la première mesure et de la seconde mesure.

14. Récepteur de puissance (105) pour un système de transfert de puissance sans fil comprenant un émetteur de puissance (101) transférant de la puissance au récepteur de puissance (105) en utilisant un signal de transfert de puissance inductive, le récepteur de puissance (105) comprenant :
une bobine de réception de puissance (107) agencée pour extraire la puissance du signal de transfert de puissance par induction ;
un premier émetteur (609) agencé pour transmettre une première requête à l'émetteur de puissance (101) pendant une phase sans transfert de puissance, la première requête étant une requête de transition de la phase sans transfert de puissance à une phase de transfert de puissance ;
un processeur de mode (601, 607) agencé pour commander le récepteur de puissance pour fonctionner dans un premier état de charge à la suite de la transmission de la première requête, une charge du récepteur de puissance (105) étant découplée de la bobine de réception de puissance (107) lorsque le récepteur de puissance (105) fonctionne dans le premier état de charge ;
un récepteur (609) agencé pour recevoir un premier accusé de réception de l'émetteur de puissance (101) ;
dans lequel
le processeur de mode (601, 607) est en outre agencé pour commander le récepteur de puissance (105) pour passer à un second état de charge en réponse à la réception du premier accusé de réception, la charge du récepteur de puissance (105) étant couplée à la bobine de réception de puissance lorsque le récepteur de puissance (105) fonctionne dans le second état de charge ;
l'émetteur (609) est agencé pour transmettre une seconde requête à l'émetteur de puissance (101) lors de l'entrée dans le second état de charge, la seconde requête étant une requête de puissance ; et le récepteur de puissance (105) comprend en outre :
un dispositif de commande (601) agencé pour entrer dans une phase de transfert de puissance, dans lequel la puissance est extraite par le récepteur de puissance (105) du signal de transfert de puissance.

15. Émetteur de puissance (101) pour un système de transfert de puissance sans fil comprenant un récepteur de puissance (105) agencé pour recevoir de la puissance de l'émetteur de puissance (101) en utilisant un signal de transfert de puissance inductive, le procédé comprenant :
un récepteur (307) agencé pour recevoir une première requête étant une requête de transition d'une phase sans transfert de puissance à une phase de transfert de puissance ;
un circuit de mesure (309) agencé pour effectuer une première mesure d'un premier paramètre de transfert de puissance en réponse à la réception de la première requête ;
un émetteur (307) agencé pour transmettre un premier accusé de réception au récepteur de puissance (105) à la suite de la première mesure ;
dans lequel
le récepteur (307) est agencé pour recevoir une seconde requête étant une requête de puissance et indiquant que le récepteur de puissance (105) est passé d'un premier état de charge à un second état de charge, une charge étant découplée d'une bobine de réception de puissance (107) du récepteur de puissance (105) lorsqu'elle est dans le premier état de charge et couplée à la bobine de réception de puissance lorsqu'elle est dans le second état de charge ;
le circuit de mesure (309) est agencé pour effectuer une seconde mesure d'un second paramètre de système en réponse à la réception de la seconde requête ;
et l'émetteur de puissance (101) comprend en outre :
un dispositif de commande (305) agencé pour entrer dans une phase de transfert de puissance générant un signal de transfert de puissance en fonction de la première mesure et de la seconde mesure.

16. Système de transfert de puissance sans fil comprenant un émetteur de puissance (101) conformément à la revendication 15 et un récepteur de puissance (105) conformément à la revendication 14.
